(19)

**Europäisches Patentamt**
**European Patent Office**
**Office européen des brevets**

(11) **EP 4 629 178 A1**

(12) **EUROPEAN PATENT APPLICATION**
published in accordance with Art. 153(4) EPC

(43) Date of publication:
**08.10.2025   Bulletin 2025/41**

(21) Application number: **22967085.6**

(22) Date of filing: **28.11.2022**

(51) International Patent Classification (IPC):
*G06T 15/80* (2011.01)

(52) Cooperative Patent Classification (CPC):
**G06T 15/80**

(86) International application number:
**PCT/JP2022/043822**

(87) International publication number:
**WO 2024/116250 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sony Interactive Entertainment Inc.
Tokyo 108-0075 (JP)**

(72) Inventors:
• **WATANABE, Atsushi**
**Tokyo 108-0075 (JP)**

• **MATSUGAMI, Hiroya**
**Tokyo 108-0075 (JP)**
• **NISHIDATE, Masaomi**
**Tokyo 108-0075 (JP)**
• **NAGAI, Norihiro**
**Tokyo 108-0075 (JP)**
• **HATAMOTO, Takahiro**
**Tokyo 108-0075 (JP)**

(74) Representative: **D Young & Co LLP
3 Noble Street
London EC2V 7BQ (GB)**

(54) **IMAGE PROCESSING DEVICE, IMAGE PROCESSING METHOD, AND PROGRAM**

(57)     There is provided an image processing apparatus 1 including a processor. The processor receives first map data and second map data, the first map data corresponding to a surface layer of an object, the second map data corresponding to at least one inner layer of the object, uses the first map data to generate surface layer image information based on light reflected from the surface layer of the object, uses the second map data to generate inner layer image information based on light passing through the surface layer of the object and scattered in the inner layer, and generates image information regarding the object by combining the surface layer image information and the inner layer image information thus generated.

**FIG.3**

```
                    START
                                      S11
         ACQUIRE SETTING INFORMATION
                                      S12
            ACQUIRE MAP DATA
                                      S13
       GENERATE SURFACE LAYER IMAGE
              INFORMATION

                                      S141
              SELECT PIXEL
                                      S142
       CALCULATE POSITIONS AT WHICH LIGHT RAY
        IS INCIDENT ON AND EXITS FROM OBJECT
                                      S143    S14
       OBTAIN PIXEL VALUES RESULTING FROM
        CORRESPONDING SUBSURFACE SCATTERING
                                      S144
       CORRECT PIXEL VALUES OF SELECTED PIXEL
        USING PIXEL VALUES AT CORRESPONDING
            POSITIONS IN SECOND MAP DATA

                                      S15
          COMPOSE OUTPUT IMAGE
                                      S16
                OUTPUT

                    END
```

EP 4 629 178 A1

**Description**

[Technical Field]

The present invention relates to an image processing apparatus, an image processing method, and a program.

[Background Art]

In recent years, it has become possible to render highly realistic images using three-dimensional computer graphics technology.

[Summary]

[Technical Problem]

For example, it has become possible to express an object comparable to a human skin in a manner more resembling an actual person's skin. At present, however, there remain many problems to be solved in expressing the texture of the actual human skin with a sense of transparency.

The present invention has been made in view of the above circumstances and provides as an object an image processing apparatus, an image processing method, and a program capable of rendering images with a realistic texture.

[Solution to Problem]

In solving the above problems of the prior art and according to one embodiment of the present invention, there is provided an image processing apparatus including a processor. The processor performs a process of receiving first map data and second map data, the first map data corresponding to a surface layer of an object, the second map data corresponding to at least one inner layer of the object, a first generation process of using the first map data to generate surface layer image information based on light reflected from the surface layer of the object, a second generation process of using the second map data to generate inner layer image information based on light passing through the surface layer of the object and scattered in the inner layer, and an image information generation process of generating image information regarding the object by combining the surface layer image information and the inner layer image information thus generated.

[Advantageous Effects of Invention]

According to the present invention, it is possible to render images with a realistic texture.

[Brief Description of Drawings]

[FIG. 1]

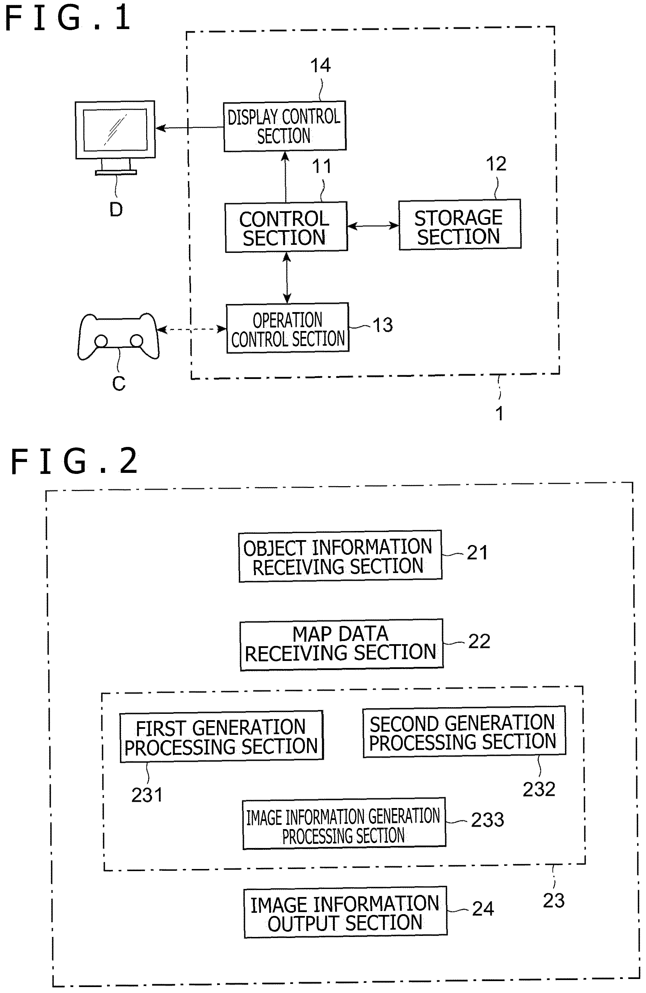

FIG. 1 is a block diagram depicting an exemplary configuration of an image processing apparatus embodying the present invention.
[FIG. 2]
FIG. 2 is a functional block diagram depicting an exemplary image processing apparatus embodying the present invention.
[FIG. 3]

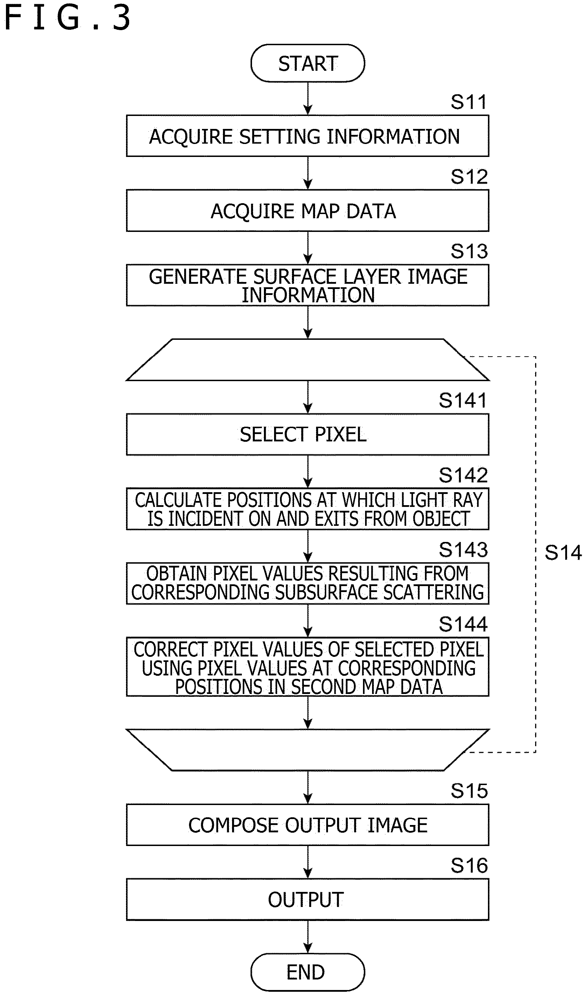

FIG. 3 is a flowchart indicating an operation example of the image processing apparatus embodying the present invention.
[FIG. 4]

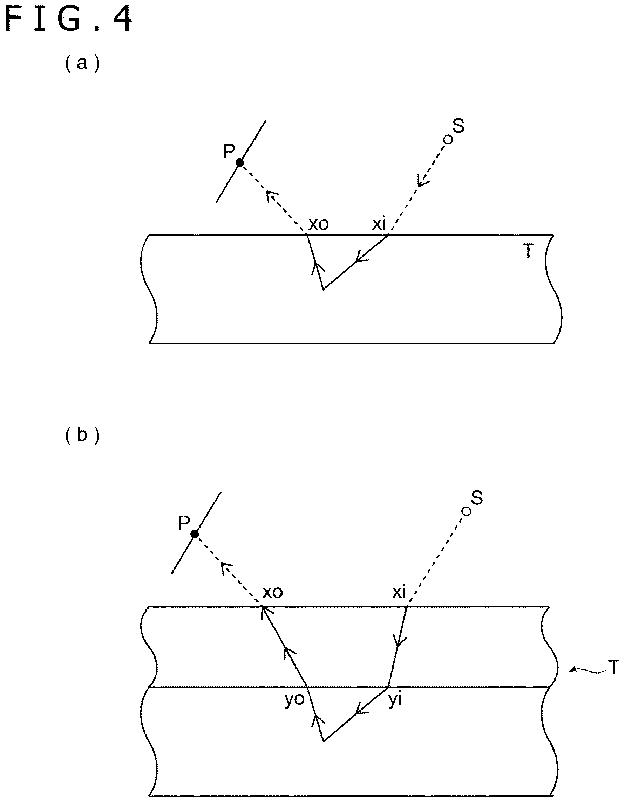

FIG. 4 is a set of explanatory views depicting examples of subsurface scattering.

[Description of Embodiment]

An embodiment of the present invention will be described below with reference to the accompanying drawings. An image processing apparatus 1 embodying the present invention is implemented as a home-use game machine, a handheld game console, a personal computer, a smartphone, a tablet, or the like, for example. As depicted in FIG. 1, the image processing apparatus 1 includes a control section 11, a storage section 12, an operation control section 13, and a display control section 14. The image processing apparatus 1 further includes a controller C and a display device D or is connected therewith.

The control section 11 includes a processor such as a CPU (central processing unit) that operates according to a program stored in the storage section 12. In one example of this embodiment, the control section 11 performs a process of rendering an image in a virtual three-dimensional space by performing processes including a process of receiving input of first map data and second map data, the first map data corresponding to a surface layer of an object in the virtual three-dimensional space (the object will be referred to as a virtual object or simply the object hereunder), the second map data corresponding to at least one inner layer of the object, a first generating process of using the first map data to generate surface layer image information based on the light reflected from the surface layer of the object, a second generating process of using the second map data to generate inner layer image information based on the light passing through the surface layer and scattered in the inner layer, and an image information generating process of generating image information regarding the object by combining the surface layer image information and the inner layer image information thus generated. The operations of the control section 11 will be discussed later.

The storage section 12 is a memory device or a disk device, for example, which stores the program executed by the control section 11. The program may be provided recorded on a computer-readable, non-transitory storage medium before being stored into the storage section 12. The storage section 12 also operates as a work memory for the control section 11.

The operation control section 13 receives a user's instructions input from the controller C (or a mouse, a keyboard, etc.) and outputs the content of the instructions to the control section 11. In accordance with the instructions input from the control section 11, the display control section 14 outputs image information from the control section 11 to the display device D for display thereon.

In another example of the present embodiment, the image processing apparatus 1 may include a network interface or similar arrangement (not depicted) that can send and receive various types of data (including the image information) to and from an external server, for example.

The operations of the control section 11 are explained next. Executing the program stored in the storage section 12 configures the control section 11 including an object information receiving section 21, a map data receiving section 22, a rendering section 23, and an image information output section 24. Further, in this example of the present embodiment, the rendering section 23 includes a first generation processing section 231, a second generation processing section 232, and an image information generation processing section 233.

The object information receiving section 21 receives information regarding the object arranged in the virtual three-dimensional space targeted for image rendering processing (the information will be referred to as setting information hereunder). The object information received here includes information regarding the shape of the object in the virtual three-dimensional space (sets of coordinates representing the vertexes of polygons arranged along the outer shape of the object) as well as the color and material of the object surface (reflectance ratio, degree of transparency, refraction index, etc., representative of texture), information identifying the map data of the texture to be applied to the object, information such as the placement position and type of a virtual light source and the direction and color of the light, and information such as the placement position and viewing angle of a virtual camera serving as a viewpoint for the rendering section 23. These pieces of information are well known as the information prescribing the virtual three-dimensional space such as a game space.

In this embodiment, the setting information received by the object information receiving section 21 includes, in addition to the above-described well-known information, information identifying the map data representing the texture to be applied to at least an inner layer, as the setting information (inner layer setting information) regarding the inner layer under the object surface. The inner layer setting information may further include information regarding the thickness and material of the inner layer.

The map data receiving section 22 receives the map data (e.g., texture data) identifying the information regarding the color at points on the surface of the object identified by the information received by the object information receiving section 21. One of the characteristics of this embodiment is that the map data receiving section 22 can receive, besides the first map data identifying the information regarding the color at points on the surface layer of the object, the second map data identifying the information regarding the color at points in at least one inner layer (under the surface layer) of the object. Usage forms of the first and the second map data will be explained later.

The first generation processing section 231 in the rendering section 23 references the setting information received by the object information receiving section 21, to render the image in the virtual three-dimensional space set by the referenced setting information. Specifically, the first generation processing section 231 uses the ray tracing method or some other well-known method to determine the pixel values of points inside a virtual screen (called the surface layer image information) when a virtual three-dimensional space image is captured at a viewing angle prescribed by the position of the virtual camera included in the setting information.

At this time, the first generation processing section 231 references the setting information regarding the external shape, surface color, and material of the object, as well as the first map data representing the texture to be applied to the surface, and the like, i.e., the setting information excluding the inner layer setting information, to determine the pixel values of the pixels in the above surface layer image information, thereby generating the surface layer image information.

The second generation processing section 232 references the setting information (including the inner layer setting information) received by the object information receiving section 21, to generate an image (called the inner layer image information) different from the surface layer image information, in a manner taking into consideration the effects of the light that passes through the surface layer of the object captured in the surface layer image information, enters the inner layer, is scattered therein again pass through the surface layer to reach the point corresponding to each of the pixels in the surface layer image information, the light having its color affected by the second map data corresponding to the inner layer.

Here, a luminance value of each of the pixels in the inner layer image information resulting from scattering of the light entering the inner layer (Subsurface Scattering) can be determined by use of well-known methods such as one based on the rendering technique disclosed by JENSEN, H. W., MARSCHNER, S. R., LEVOY, M., AND HANRAHAN, P. 2001. A practical model for subsurface light transport. In" Proceedings of SIGGRAPH 2001, 511-518.

Specifically, the second generation processing section 232 sequentially selects each of the pixels in the inner layer image information to determine a path of a light ray reaching the selected pixel, by use of the ray tracing method. Due to consideration of the subsurface scattering, at the time the light ray intersects with the object, an exit position $x_o$ at which the light ray exits from the object is generally different from an incident position $x_i$ at which the exit light ray is incident on the object.

The second generation processing section 232 first obtains luminance $S_d(x_i, x_o)$ of the subsurface scattering using any of the above-mentioned well-known methods, and thereby determines the luminance value of the selected pixel.

Next, the second generation processing section 232 uses the second map data to correct the pixel values of each of the pixels in the inner layer image information, the pixels having their luminance values determined in consideration of subsurface scattered light, the pixel values including the saturation and hue of each pixel.

That is, the second generation processing section 232 corrects at least either the saturation or the hue, or both the saturation and the hue plus the luminance value, in the pixel values (in which the luminance value $V=S_d(x_i, x_o)$ is set in consideration of the subsurface scattered light) selected from the inner layer image information, on the basis of the pixel values (color information) of the second map data corresponding to at least either the position $x_o$ or the position $x_i$ at which the light ray reaching the selected pixel intersects with the object.

For example, the second generation processing section 232 sets the pixel values to ($\alpha h_i+\beta h_o$, $\alpha s_i+\beta s_o$, $V+\alpha v_i+\beta v_o$) using the pixel values ($h_o$, $s_o$, $v_o$) of the second map data corresponding to the position $x_o$ and the pixel values ($h_i$, $s_i$, $v_i$) of the second map data corresponding to the position $x_i$. Here, the values $\alpha$ and $\beta$ may each be a predetermined value or may be determined for each object. Also, $\alpha$ and $\beta$ may be the same value, $\alpha=\beta$, or may be values different from each other.

Incidentally, when the light ray reaching the position $x_i$ further passes through other positions $x'_o$ and $x'_i$ of a given object, the pixel values may be corrected repeatedly by use of the luminance $S_d(x'_i, x'_o)$ of the subsurface scattering of the object, the pixel values ($h'_o$, $s'_o$, $v'_o$) of the second map data at the position $x'_o$, and the pixel values ($h'_i$, $s'_i$, $v'_i$) of the second map data corresponding to the position $x'_i$.

Alternatively, the second generation processing section 232 may only take into consideration the subsurface scattering of the object most recently passed through by the light ray reaching the selected pixel.

Further, it is explained above that the light ray reaching the selected pixel passes through the positions $x_o$ and $x_i$ on the object. Alternatively, this light path may be that of primary scattered light (light scattered only once under the surface) stemming from the subsurface scattering. In this case, multiple scattered light rays (light scattered multiple times under the surface) affect only the luminance.

It is further explained above that the second generation processing section 232 sets the pixel values of the inner layer image information in an HSV color space (color space of hue, saturation, and luminance). However, this is only an example. Alternatively, the pixel values may be set using RGB (red, green, blue) values corresponding to the HSV values above.

The image information generation processing section 233 combines pixel values $P1(u, v)$ of each pixel in the surface layer image information generated by the first generation processing section 231 with pixel values $P2(u, v)$ of the corresponding pixel in the inner layer image information generated by the second generation processing section 232, so as to determine pixel values $P(u, v)$ of the corresponding pixel of an output image.

For example, the image information generation processing section 233 determines the pixel values $P(u, v)$ of the pixel at a position u, v in the output image as

$$P(u, v)=a \cdot P1(u, v)+b \cdot P2(u, v)$$

where, the values a and b are positive values determined beforehand (or may be determined freely by the user) in such a manner that the expression a+b=1 is satisfied.

The image information output section 24 outputs the output image generated by the image information generation processing section 233 that has determined the pixel values of each of the pixels of the output image.

[Operations]

The operations of the image processing apparatus 1 embodying the present invention are explained next. In this example of the present embodiment, it is assumed that the image processing apparatus 1 is a home-use game machine and that the control section 11 of the image processing apparatus 1 performs the processing of the game of which the game space is a virtual three-dimensional space. In this example, the control section 11 outputs the setting information regarding the virtual three-dimensional space in which a virtual human object, for example, is arranged. Also in this example, the control section 11 may set the first map data corresponding to the surface layer of the object and the second map data corresponding to at least one inner layer of the object.

Further, here, the second map data may be determined on the basis of the pigments in the human epidermis captured by a skin diagnosis apparatus such as an infrared photography camera. However, this is only an example, and the second map data may alternatively be obtained by use of methods based on artificial intelligence or the like (e.g., techniques for estimating the pigment distribution in the epidermis on the basis of ordinary digital photos at: https://www. tohoku.ac.jp/japanese/newimg/pressimg/tohokuunivpress20210128_01web_skin.pdf).

When instructed by the processing of the game, the control section 11 of the image processing apparatus 1 starts a rendering process such as one indicated in FIG. 3. The control section 11 acquires the setting information regarding the object arranged in the virtual three-dimensional space targeted for rendering (S11).

The setting information in this example is generated on the basis of the processing of the game as discussed above. The setting information includes information regarding the shape of the virtual human object in the virtual three-dimensional space and the color and material of the surface of the virtual human object (color and bumps of the surface of the skin stratum corneum), information identifying the first map data as the texture to be applied to the surface of the virtual human object, information identifying the second map data affecting the subsurface scattered light of the virtual human object (the inner layer setting information), information such as the placement position and type of a virtual light source and the direction and color of the light, and information such as the placement position of a virtual camera serving as the viewpoint for the rendering.

The control section 11 then acquires the first and the second map data identified by the above setting information (S12). In this example of the present embodiment, the first and the second map data are assumed to be provided by the processing of the game.

Still, this is also an example, and the second map data may alternatively be acquired from an external server, among others.

Using the ray tracing method or some other well-known method, the control section 11 determines the pixel values at each of the points in a virtual screen (surface layer image information) when the image in the virtual three-dimensional space is captured at the viewing angle prescribed, for example, by the position of a virtual camera included in the setting information (S13). In step S13, the control section 11 references the setting information regarding the external shape, surface color, and material of the virtual human object, as well as the first map data representing the texture to be applied to the surface of the virtual human object, i.e., the setting information excluding the inner layer setting information, to determine the pixel values of each of the pixels in the above surface layer image information, thereby generating the surface layer image information.

Furthermore, the light that passes through the surface layer of the virtual human object in the virtual space to enter the inner layer is scattered therein to again pass through the surface layer as the light with its color affected by the second map data corresponding to the inner layer, the light eventually reaching the point corresponding to each of the pixels in the surface layer image information. The control section 11 generates the inner layer image information different from the surface layer image information in a manner taking into consideration the effects of the light reaching in the above manner the point corresponding to each pixel (S14).

In this process, the control section 11 sequentially selects each of the pixels in the inner layer image information (S141). Using the ray tracing method, the control section 11 acquires an exit position xo at which the light ray reaching the selected pixel (FIG. 4: P) eventually exits from the virtual human object (FIG. 4: T) and an incident position xi at which the exit light ray is incident on the virtual human object (T) (positions xi and xo are generally different from each other, as depicted in FIG. 4(a)) (S142). Incidentally, in FIG. 4, the symbol S stands for a light source. The control section 11 obtains luminance Sd(xi, xo) of the subsurface scattering and thereby determines the luminance in the pixel values of the selected pixel (S143). The luminance of the subsurface scattering here may be calculated by use of any one of the well-known methods discussed above.

The control section 11 then corrects at least either the saturation or the hue, or both the saturation and the hue plus the luminance value, in the values of the pixel selected in step S141, on the basis of the pixel values (color information) of the second map data corresponding to at least one of the positions xo and xi at which the light ray reaching the pixel selected in step S141 intersects with the virtual human object (S144).

Specifically, here, when the pixel values (expressed in the HSV color space here) in which the luminance determined in step S143 of the pixel selected in step S141 is set are given as

(O, O, V),
the control section 11 corrects the pixel values to
$(\alpha hi+\beta ho, \alpha si+\beta so, V+\alpha vi+\beta vo)$
using the pixel values (ho, so, vo) of the second map data corresponding to the position xo and the pixel values (hi, si, vi) of the second map data corresponding to the position xi. Here, the values $\alpha$ and $\beta$ are a predetermined value each.

Then, the control section 11 generates the inner layer image information by repeatedly carrying out steps S141 through S144 until the pixel values of all pixels in the inner layer image information are determined.

The control section 11 then generates an output image by combining the corresponding pixels in both the surface layer image information generated in step S13 and the inner layer image information generated in step S14, so as to determine the pixel values of the corresponding pixels in the output image (S15).

For example, the image information generation processing section 233 determines the pixel values P(u, v) of the pixels at the position u, v in the output image as

$$P(u, v)=a \cdot P1(u, v)+b \cdot P2(u, v)$$

by use of the pixel P1(u, v) at the corresponding position in the surface layer image information and the pixel P2(u, v) at the corresponding position in the inner layer image information. The values a and b are positive values determined beforehand in such a manner that the expression a+b=1 is satisfied.

The control section 11 offers the output image generated in step S15 to the processing of the game that has ordered the rendering process (S16). For example, in the processing of the game, the control section 11 outputs the generated output image via the display control section 14 to the display device D for display thereon.

In this example of the present embodiment, the color of the light scattered under the surface layer of the object is determined on the basis of color distribution information (second map data) corresponding to the inner layer. This makes it possible to generate the image of the object with a more realistic texture.

[Effects of numerous scattered light rays]

In connection with the description above, in a case where there are multiple rays of scattered light exiting most recently through the exit position xo from the virtual human object to reach the selected one of the pixels in the inner layer image information (i.e., in the case where there are multiple corresponding incident positions xi), the correction in step S144 in the process of FIG. 3 may be carried out by summing the pixel values of these positions. That is, in this example, the pixel values (ho, so, vo) of the second map data corresponding to the position xo and the pixel values (hi, si, vi) of the second map data corresponding to the position xi are used to correct the pixel values to

$$(\textstyle\sum(\alpha k \cdot hi\_k)+\beta ho, \sum(\alpha k \cdot si\_k)+\beta so, \sum V+\sum(\alpha k \cdot vi\_k)+\beta vo)$$

where, the terms $\Sigma(\alpha k \cdot hi\_k)+\beta ho$, $\Sigma(\alpha k \cdot si\_k)$, $\Sigma(\alpha k \cdot vi\_k)$ signify that the pixel values (hi_k, si_k, vi_k) of the second map data at the incident position of a k-th light ray are summed. Further, the symbol $\Sigma V$ denotes the sum of the luminance Sd(xi_k, xo) of the subsurface scattering. The values $\alpha k$ and $\beta$ are determined beforehand in such a manner that the expression $\alpha k+\beta=1$ is satisfied.

[Effects of multiple scattered light rays]

In the case where the primary scattered light and the multiple scattered light rays are distinguished from one another in calculating the luminance of the subsurface scattering, the incident position xi and the exit position xo may be limited to those of the primary scattered light that is scattered only once in the inner layer (FIG. 4(a)).

Furthermore, the subsurface scattering may be of a multilayer structure. In this example, different second map data may be set for each of multiple layers (the same second map data may also be used). For example, suppose that a light ray exiting at the exit position xo exits at an exit position yo of a second inner layer under a first inner layer, the light ray being incident at an incident position yi on a boundary surface between the first and the second inner layers, the light ray being further incident at the incident position xi on the first inner layer. Suppose further that in the second map data corresponding to the first inner layer, the pixel values corresponding to the positions xi and xo are (hxi, sxi, vxi) and (hxo, sxo, vxo), respectively, and that in the second map data corresponding to the second inner layer, the pixel values corresponding to the positions yi and yo are (hyi, syi, vyi) and (hyo, syo, vyo), respectively. In that case, where the pixel values (expressed in the HSV color space here), in consideration of the subsurface scattering, of the pixel selected from the inner layer image information are given as

(O, O, V),
the control section 11 need only correct the pixel values to
$(\alpha1hxi+\beta1hxo+\alpha2hyi+\beta2hyo, \alpha1sxi+\beta1sxo+\alpha2syi+\beta2syo,$
$V+\alpha1vxi+\beta1vxo+\alpha2vyi+\beta2vyo)$

where, the value V denotes the luminance of the light ray that is first incident at the position xi on the first inner lay, then incident at the position yi on the second inner layer, exits at the position yo from the second inner layer to the first inner layer, and exits thereafter at the position xo from the first inner layer, before reaching the position corresponding to the selected pixel, the light ray being scattered in the first and the second inner layers.

In the case where there are more layers, the control section 11 is only required to perform similar processing to correct the pixel values.

[Example of correcting hue and saturation]

Incidentally, it is explained above that upon correction, the second map data is used to correct the luminance as well. However, this is not limitative of the present embodiment, and the luminance determined by calculation of the subsurface scattering may alternatively be used unmodified.

[Selection of second map data]

Further, the image processing apparatus 1 of this embodiment may be provided beforehand with multiple pieces of the second map data for use in the above-described correction. Any of these pieces of the second map data may be selected for the correction.

For example, the image processing apparatus 1 may have different pieces of the second map data prepared in advance corresponding to the virtual human object in different environmental states, such as

- in normal state,
- under the influence of alcohol, or
- in a hot place such as in the sauna,
  or in different emotional states, such as
- being upset,
- having a scowl on the face, or
- laughing.

The different pieces of the second map data prepared beforehand for the different states above may be stored in the storage section 12 in association with information identifying the corresponding states.

In this example, the control section 11 receives the information identifying the state of the virtual human object as the information identifying the second map data to be set for that object. The control section 11 then acquires and utilizes the second map data stored in the storage section 12 in association with the received information.

Incidentally, whereas it is assumed here that the storage section 12 stores the second map data, this is not limitative of the present embodiment, and the control section 11 may alternatively acquire from a server apparatus (not depicted) the second map data stored therein in association with the information identifying the corresponding states.

[Configuration of the map data]

The first and the second map data many not necessarily be image data and may be any suitable information as long as image data can be generated therefrom.

For example, the map data may be set as instructions to generate the image data. Specifically, a piece of the second map data may be set as an instruction to randomly arrange pixel blocks of red particles in a predetermined concentration. The pixel blocks have their positions changed every time such map data is generated.

[Reference Signs List]

1: Image processing apparatus
11: Control section
12: Storage section
13: Operation control section
14: Display control section
21: Object information receiving section
22: Map data receiving section
23: Rendering section
24: Image information output section
231: First generation processing section
232: Second generation processing section
233: Image information generation processing section

**Claims**

1. An image processing apparatus comprising:

   a processor, wherein
   the processor performs
   a process of receiving first map data and second map data, the first map data corresponding to a surface layer of an object, the second map data corresponding to at least one inner layer of the object,
   a first generation process of using the first map data to generate surface layer image information based on light reflected from the surface layer of the object,
   a second generation process of using the second map data to generate inner layer image information based on light passing through the surface layer of the object and scattered in the inner layer, and
   an image information generation process of generating image information regarding the object by combining the surface layer image information and the inner layer image information thus generated.

2. The image processing apparatus according to claim 1, wherein,
   in the second generation process, the processor calculates luminance of the light passing through the surface layer of the object and scattered in the inner layer, the processor further correcting at least either a hue or saturation of the light on a basis of the second map data.

3. The image processing apparatus according to claim 1, wherein,
   in the second generation process, the processor calculates luminance of light incident at a position $x_i$ on the surface layer of the object and exiting at a position $x_o$ from the surface layer after being scattered thereunder, the processor further correcting at least either a hue or saturation of the light on a basis of color information regarding either the position $x_i$ or the position $x_o$ in the second map data.

4. The image processing apparatus according to claim 1, wherein
   the object is a virtual object of an animal including a human, and the second map data is determined on a basis of an intraepidermal pigment captured by a skin diagnosis apparatus.

5. A control method that uses an image processing apparatus including a processor and that is performed by the processor, the method comprising:

   a process of receiving first map data and second map data, the first map data corresponding to a surface layer of an object, the second map data corresponding to at least one inner layer of the object;
   a first generation process of using the first map data to generate surface layer image information based on light reflected from the surface layer of the object;
   a second generation process of using the second map data to generate inner layer image information based on light passing through the surface layer of the object and scattered in the inner layer; and
   an image information generation process of generating image information regarding the object by combining the surface layer image information and the inner layer image information thus generated.

6. A program for causing an image processing apparatus including a processor to function as:

means for performing a process of receiving first map data and second map data, the first map data corresponding to a surface layer of an object, the second map data corresponding to at least one inner layer of the object;
means for performing a first generation process of using the first map data to generate surface layer image information based on light reflected from the surface layer of the object;
means for performing a second generation process of using the second map data to generate inner layer image information based on light passing through the surface layer of the object and scattered in the inner layer; and
means for performing an image information generation process of generating image information regarding the object by combining the surface layer image information and the inner layer image information thus generated.

# FIG.1

DISPLAY CONTROL
SECTION ~14

D

CONTROL
SECTION ~11

STORAGE
SECTION ~12

OPERATION
CONTROL SECTION ~13

C

1

# FIG.2

OBJECT INFORMATION
RECEIVING SECTION ~21

MAP DATA
RECEIVING SECTION ~22

FIRST GENERATION
PROCESSING SECTION

SECOND GENERATION
PROCESSING SECTION

231

232

IMAGE INFORMATION GENERATION
PROCESSING SECTION ~233

IMAGE INFORMATION
OUTPUT SECTION ~24

23

# FIG.3

```
            ( START )
                │
                ▼                           S11
  ┌─────────────────────────────────────┐
  │     ACQUIRE SETTING INFORMATION      │
  └─────────────────────────────────────┘
                │
                ▼                           S12
  ┌─────────────────────────────────────┐
  │          ACQUIRE MAP DATA            │
  └─────────────────────────────────────┘
                │
                ▼                           S13
  ┌─────────────────────────────────────┐
  │      GENERATE SURFACE LAYER IMAGE    │
  │             INFORMATION              │
  └─────────────────────────────────────┘
                │
                ▼
                │                           S141
  ┌─────────────────────────────────────┐
  │            SELECT PIXEL              │
  └─────────────────────────────────────┘
                │
                ▼                           S142
  ┌─────────────────────────────────────┐
  │ CALCULATE POSITIONS AT WHICH LIGHT RAY│
  │  IS INCIDENT ON AND EXITS FROM OBJECT │
  └─────────────────────────────────────┘       S14
                │
                ▼                           S143
  ┌─────────────────────────────────────┐
  │    OBTAIN PIXEL VALUES RESULTING FROM│
  │ CORRESPONDING SUBSURFACE SCATTERING  │
  └─────────────────────────────────────┘
                │
                ▼                           S144
  ┌─────────────────────────────────────┐
  │ CORRECT PIXEL VALUES OF SELECTED PIXEL│
  │  USING PIXEL VALUES AT CORRESPONDING │
  │   POSITIONS IN SECOND MAP DATA       │
  └─────────────────────────────────────┘
                │
                ▼
                │                           S15
  ┌─────────────────────────────────────┐
  │       COMPOSE OUTPUT IMAGE           │
  └─────────────────────────────────────┘
                │
                ▼                           S16
  ┌─────────────────────────────────────┐
  │              OUTPUT                  │
  └─────────────────────────────────────┘
                │
                ▼
            (  END  )
```

# FIG.4

(a)

(b)

# INTERNATIONAL SEARCH REPORT

International application No.

**PCT/JP2022/043822**

## A. CLASSIFICATION OF SUBJECT MATTER

**G06T 15/80**(2011.01)i
FI: G06T15/80

According to International Patent Classification (IPC) or to both national classification and IPC

## B. FIELDS SEARCHED

Minimum documentation searched (classification system followed by classification symbols)

G06T15/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | JP 2013-54728 A (CANON INC.) 21 March 2013 (2013-03-21) paragraphs [0002], [0027]-[0057], fig. 1, 8 | 1, 4-6 |
| A | | 2-3 |
| A | JP 2017-129991 A (CANON INC.) 27 July 2017 (2017-07-27) entire text, all drawings | 1-6 |
| A | US 2009/0109221 A1 (PLANCK, Maxwell et al.) 30 April 2009 (2009-04-30) entire text, all drawings | 1-6 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 February 2023** | **14 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/043822**

| Patent document cited in search report | | | Publication date (day/month/year) | Patent family member(s) | | | Publication date (day/month/year) |
|---|---|---|---|---|---|---|---|
| JP | 2013-54728 | A | 21 March 2013 | US | 2013/0038619 | A1 | |
| | | | | paragraphs [0004]-[0005], [0052]-[0084], fig. 1, 8 | | | |
| JP | 2017-129991 | A | 27 July 2017 | US | 2017/0206703 | A1 | |
| | | | | entire text, all drawings | | | |
| US | 2009/0109221 | A1 | 30 April 2009 | WO | 2004/100072 | A1 | |
| | | | | entire text, all drawings | | | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JENSEN, H. W ; MARSCHNER, S. R ; LEVOY, M. ; HANRAHAN, P.** A practical model for subsurface light transport. *Proceedings of SIGGRAPH*, 2001, vol. 2001, 511-518